# EUROPEAN PATENT APPLICATION

(11) **EP 4 670 995 A1**
(43) Date of publication of application: **31.12.2025**
(21) Application number: 25184450.2
(22) Date of filing: 23.06.2025
(51) Int. Cl.: B41J 25/34, G01G 19/40, B41J 3/407, B41J 2/32, B41J 29/02

(54) **PRINTER, FOOD PRODUCT SCALE AND ASSOCIATED REMOVABLE PRINTHEAD UNIT**

(30) Priority: 27.06.2024 US 202418756806
(71) Applicant: Illinois Tool Works Inc., Glenview IL 60025 (US)
(72) Inventor: KNOBLAUCH, Austin, Glenview, 60025 (US); REDMAN, Randall L., Glenview, 60025 (US)
(74) Representative: HGF

(57) **Abstract**

A printer includes a media path along which a media is movable, and a printhead assembly positioned along the media path at a first side of the media path, wherein the printhead assembly includes a carrier component and a printhead unit, wherein the printhead unit is slidably engageable with the carrier component to facilitate install and removal of the printhead unit in the printer. The printhead unit comprises a removal side that includes a gripping region, wherein the gripping region is defined by an upwardly extending recess on a bottom side of the printhead unit, wherein the upwardly extending recess is bounded on the removal side by a pull wall.

## Description

### TECHNICAL FIELD

This application relates generally to scales used for weighing food product in supermarkets, groceries and other stores and printing labels, and, more particularly, to a scale type printer including a printhead assembly with a printhead that is biased toward a print roller.

### BACKGROUND

In typical commercial food product scale applications the scale is used to weigh food products and determines prices for the food products, and an associated printer prints a label for application to the food product. An operator enters a product number, such as a PLU (price look-up) number, for the product being weighed and the scale accesses its database, or accesses a remote database, for pricing information on the product. The total price for the item is then determined based upon its weight. Price can also be determined based upon item count. In either case, the food product scale typically prints a label with the price and other information for the product.

As used herein, the term printer encompasses both devices that function solely or primarily as printers, as well as other devices that include a printer function but also include other functions in addition to printing, such as a weighing scale that also prints labels. Such scales and other printers can include label stock or other media cassettes that are removable for the purpose of replacing or changing the label stock or other media loaded into the cassette.

In addition, printhead assemblies that have a printhead unit that is biased toward a print roller are known. Arrangements in which the printhead unit is slidingly insertable and removable are also known.

It would be desirable to provide a scale (or other printer) with an improved printhead unit system that facilitates such sliding installation and removal.

### SUMMARY

In one aspect, a printer includes a media path along which a media is movable, and a printhead assembly positioned along the media path at a first side of the media path, wherein the printhead assembly includes a carrier component and a printhead unit, wherein the printhead unit is slidably engageable with the carrier component to facilitate install and removal of the printhead unit in the printer. The printhead unit comprises a removal side that includes a gripping region, wherein the gripping region is defined by an upwardly extending recess on a bottom side of the printhead unit, wherein the upwardly extending recess is bounded on the removal side by a pull wall.

In another aspect, a printhead unit is slidably insertable into a printhead assembly of a printer. The printhead unit includes a printhead component, a heatsink for transferring heat from the printhead component, and a printed circuit board carrying electronics for driving the printhead component. A cover member holds the printed circuit board, wherein the cover member includes a top side, a bottom side and first and second lateral sides, wherein the printed circuit board is held at the top side. The cover member includes a gripping region along the first lateral side, wherein the gripping region is defined by an upwardly extending recess of the bottom side of the cover member, wherein the upwardly extending recess is bounded on the first lateral side by a pull wall.

The details of one or more embodiments are set forth in the accompanying drawings and the description below. Other features, objects, and advantages will be apparent from the description and drawings, and from the claims.

### BRIEF DESCRIPTION OF THE DRAWINGS

Figs. 1 and 2 show perspective views of a scale;
Fig. 3 shows a perspective view with label cassette removed;
Fig. 4 shows a partial perspective of a printhead region within the cassette receiving station;
Fig. 5 shows a partial perspective view of portions of the printhead region;
Figs. 6 and 7 show perspective views of a printhead unit;
Figs. 8 and 9 show perspective views of the printhead unit slidably engaged with a carrier;
Fig. 10 shows a cross-section of the printhead unit engaged with the carrier;
Fig. 11 shows a perspective view of portions of the printhead assembly; and
Fig. 12 shows a perspective view with the printhead unit removed.

### DETAILED DESCRIPTION

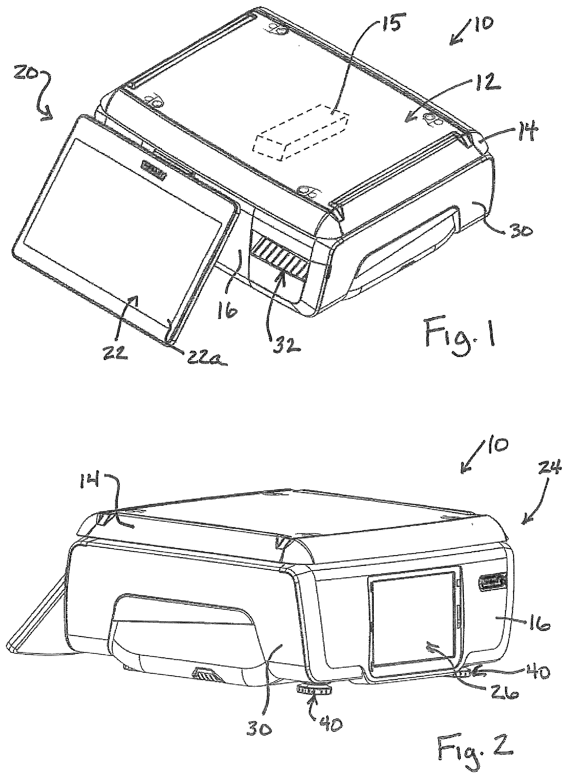

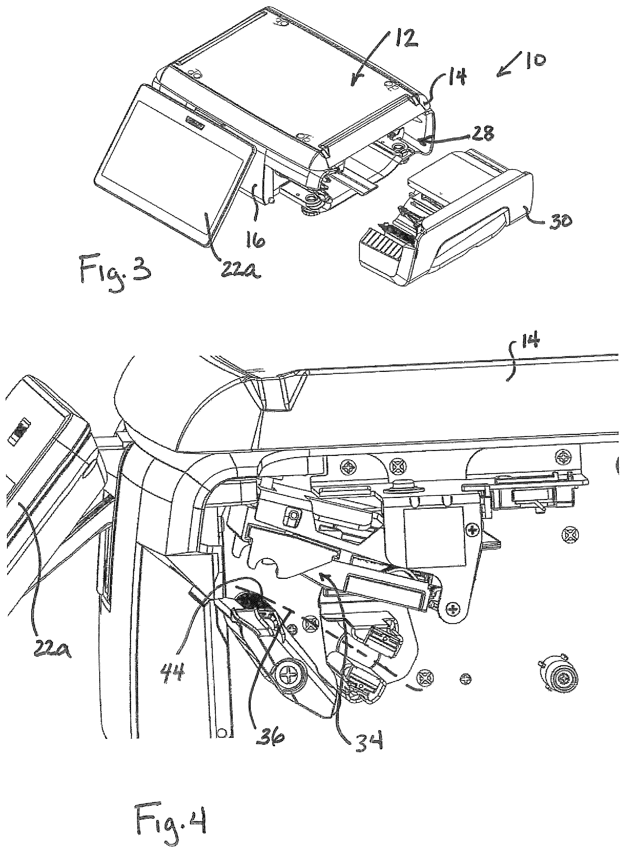

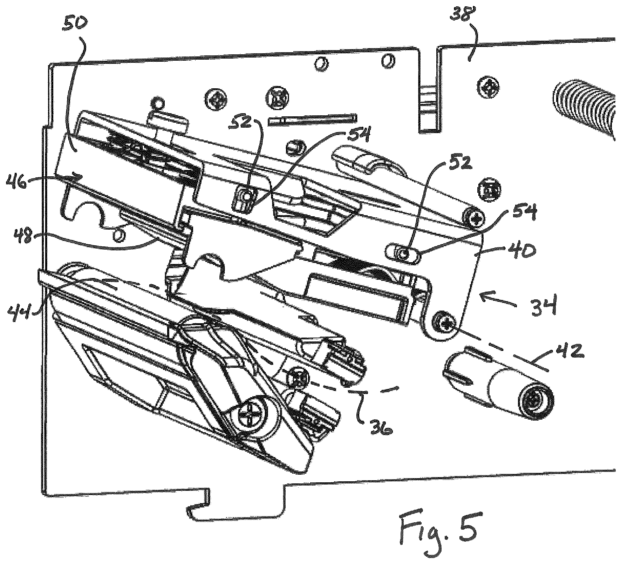

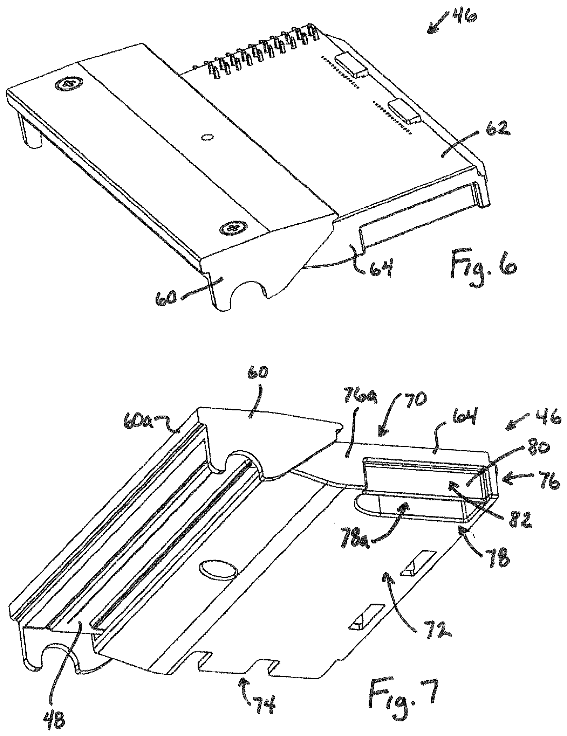

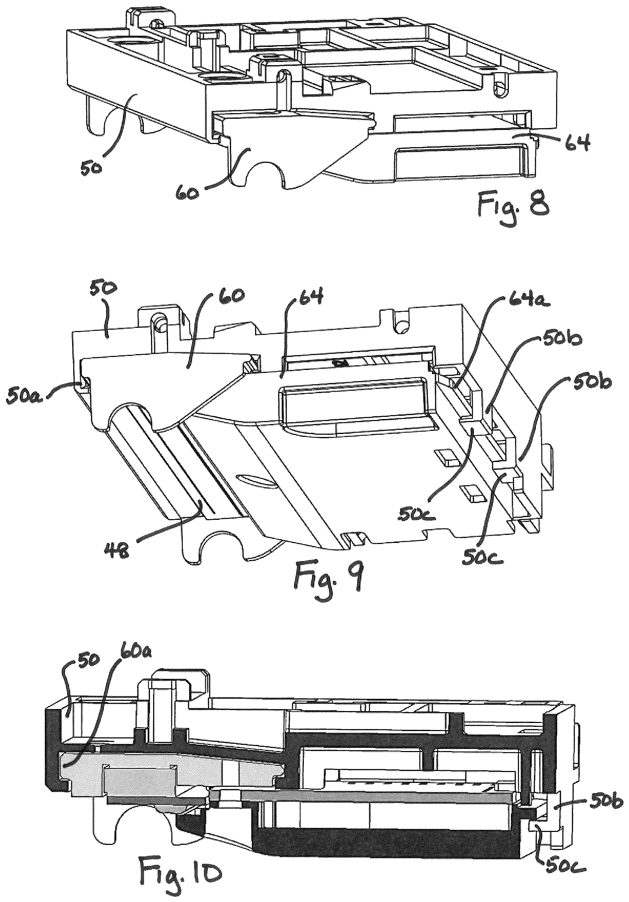

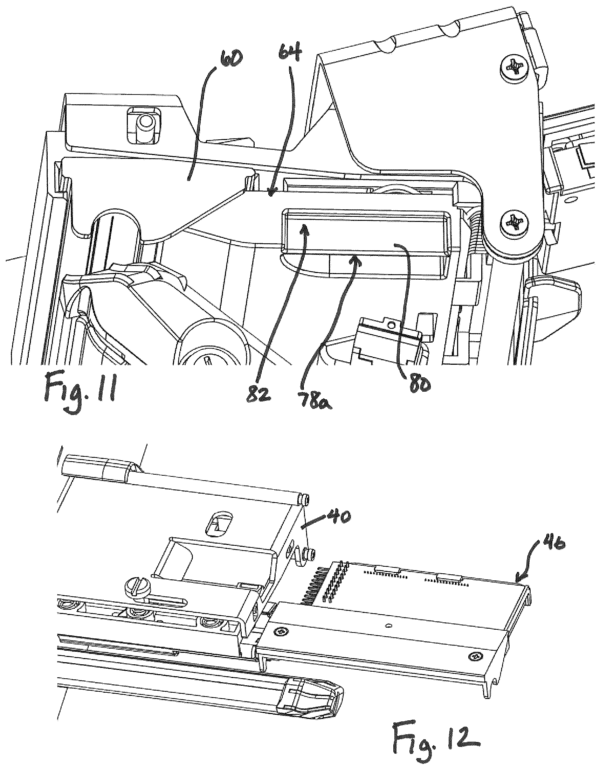

Referring to Figs. 1-12, an exemplary scale configuration is shown. The scale 10 includes a weighing station 12, which in some embodiments may be formed by a weighing platter 14 that can be removed (e.g., for cleaning) from atop the scale body 16. A platter support bracket (not shown) transfers forces to a mechanism, such as a load cell 15 located internal of the scale body 16, for producing weight indicative signals when items are placed on the weighing station. An operator interface side 20 of the scale includes an operator interface 22 configured to display information associated with scale operations. By way of example, the operator interface 22 may be formed by a touch-screen display 22a. A customer interface side 24 of the scale includes a customer interface 26, which in certain embodiments may be formed by any suitable display screen technology.

A side portion of the scale body incudes a cassette station 28 that receives a removable label stock cassette 30 that defines a label exit slot 32. A printhead assembly 34 is located within the scale body along a label stock path 36 and may use any suitable printing technology for printing on labels of a label supply roll loaded in the cassette 30, which printed labels then exit the label exit slot 32 to be applied to products. For example, the printhead assembly may carry a thermal printhead for printing on thermal label stock.

The printhead assembly 34 is pivotably mounted to a wall 38 of the scale body by a support bracket 40 which is capable of rotation about an axis 42. The printhead assembly pivots toward a print roller 44 when the cassette is loaded into the cassette station, placing the label stock between the printhead assembly 34 and the print roller 44 for the purpose of printing. Here, the printhead assembly 34 is located at an upper side of the label stock path 36 and the print roller 44 is located at a lower side of the label stock path 36. The printhead assembly 34 includes a printhead unit 46 that is biased toward the print roller 44 by a biasing assembly, such that a printhead 48 of the printhead unit 46 is applied with pressure against the label stock.

The printhead assembly includes a carrier 50 to which the printhead unit 46 is attached, and the carrier 50 is mounted to the support bracket 40 such that the carrier 50 can move slightly relative to the support bracket. Here, for this purpose, pins 52 extending from the carrier 50 pass through slots 54 on the support bracket, allowing the necessary play.

The printhead unit 46 includes the printhead component 48, a heatsink 60 for transferring heat from the printhead component, a printed circuit board 62 carrying electronics for driving the printhead component, and a cover member 64 holding the printed circuit board. The printhead unit 46 is slidably engageable with the carrier 50 for ease of placement into the printhead assembly 34, and ease of removal of the printhead unit 46 from the printhead assembly for the purpose of cleaning or repair or replacement. For this purpose, the carrier 50 defines a front slot 50a that faces rearwardly and into which a nose portion 60a of the heatsink 60 engages for support. Similarly, the carrier 50 also includes rear leg members 50b that include forwardly extending feet 50c to define support ledge features on which a rearwardly extending rail 64a of the cover member 64 is supported.

Here, the cover member 64 includes a top side 70, a bottom side 72 and opposite lateral sides 74, 76. In the install position of the printhead unit, lateral side 74 in an inward side and lateral side 76 is an outward side. The printed circuit board 62 is held at the top side 70 of the cover member. To ease install and removal of the printhead unit from the printhead assembly, the cover member 64 includes a gripping region 78 along the lateral side 76. The gripping region 78 is defined by an upwardly extending recess 78a of the bottom side of the cover member. The upwardly extending recess 78a is bounded on the lateral side 76 by a pull wall 80. The pull wall 80 is a wall of the cover member 64, and may be formed as a moulded portion of the cover member 64 (e.g., where the cover member is a moulded plastic component). The pull wall 80 is offset inwardly of an outwardly facing edge 76a at the lateral side 76 of the cover member 60 to define a side recess 82 at the outwardly facing edge.

The upwardly extending recess 78a is defined as a pocket that is sized to enable insertion of at least a portion of a finger therein, enabling a user to engage the inwardly facing side of the pull wall 80 to pull the printhead unit 46 out of carrier 50. The side recess 80 acts as an indicator to the user as to where the pocket is located and, thus, the proper location for finger placement. The improved gripping region 78 provides for simpler and more effective manipulation of the printhead unit 46 by the end user of a printer, particularly when slidingly removing the printhead unit for cleaning, repair or replacement.

It is to be clearly understood that the above description is intended by way of illustration and example only, is not intended to be taken by way of limitation, and that other changes and modifications are possible. For example, while the above description focuses on a scale with a label printing function, the mechanism could be utilized on printers that do not have a weighing function, and could also be used in connection with media other than label stock.

## Claims

1. A printer, comprising:
a media path along which a media is movable;
a printhead assembly positioned along the media path at a first side of the media path, wherein the printhead assembly includes a carrier component and a printhead unit, wherein the printhead unit is slidably engageable with the carrier component to facilitate install and removal of the printhead unit in the printer;
wherein the printhead unit comprises a removal side that includes a gripping region, wherein the gripping region is defined by an upwardly extending recess on a bottom side of the printhead unit, wherein the upwardly extending recess is bounded on the removal side by a pull wall.

2. The printer of claim 1, wherein the upwardly extending recess is formed in a cover of the printhead unit, wherein the pull wall is a wall of the cover, wherein the pull wall is offset inwardly of an outwardly facing edge of the cover to define a side recess at the outwardly facing edge.

3. The printer of claim 1, wherein the upwardly extending recess is defined as a pocket that is sized to enable insertion of at least a portion of a finger during user removal of the printhead unit.

4. A printhead unit slidably insertable into a printhead assembly of a printer, the printhead unit comprising:
a printhead component;
a heatsink for transferring heat from the printhead component;
a printed circuit board carrying electronics for driving the printhead component;
a cover member holding the printed circuit board, wherein the cover member includes a top side, a bottom side and first and second lateral sides, wherein the printed circuit board is held at the top side, wherein the cover member includes a gripping region along the first lateral side, wherein the gripping region is defined by an upwardly extending recess of the bottom side of the cover member, wherein the upwardly extending recess is bounded on the first lateral side by a pull wall.

5. The printer of claim 4, wherein the pull wall is a wall of the cover member, wherein the pull wall is offset inwardly of an outwardly facing edge at the first lateral side of the cover member to define a side recess at the outwardly facing edge.

6. The printer of claim 4, wherein the upwardly extending recess is defined as a pocket that is sized to enable insertion of at least a portion of a finger.
